Europäisches Patentamt

European Patent Office

Office européen des brevets

(11) Veröffentlichungsnummer: **0 403 737**
**A1**

(12) **EUROPÄISCHE PATENTANMELDUNG**

(21) Anmeldenummer: **90105299.3**

(22) Anmeldetag: **21.03.90**

(51) Int. Cl.5: **E03F 3/06, F16L 55/16,**
**F16L 55/18**

(30) Priorität: **21.06.89 DE 3920191**

(43) Veröffentlichungstag der Anmeldung:
**27.12.90 Patentblatt 90/52**

(84) Benannte Vertragsstaaten:
**AT BE CH DE FR GB LI LU NL SE**

(71) Anmelder: **TEERBAU Gesellschaft für**
**Strassenbau mbH**
**Prinz-Friedrich-Strasse 3**
**D-4300 Essen 15(DE)**

(72) Erfinder: **Louis, Hans-Joachim**
**Herrenberger Strasse 34**
**D-7400 Tübingen(DE)**

(54) **Verfahren und Vorrichtung zum Abdichten eines Abwasserkanals im Bereich von Seitenanschlüssen.**

(57) Die Erfindung betrifft ein Verfahren zum Abdichten eines Abwasserkanals(4) im Bereich eines Seitenanschlusses(2) , wobei das Eindringen von Wasser zwischen Abwasserkanal (4) und Inliner(1) verhindert wird. Dieses wird durch mindestens eine elastische, ringförmige Dichtung(3) erreicht, die vor dem Einbringen des Inliner(1) im Bereich der Einmündung an der Innenwandung des Abwasserkanals(4) fixiert wird. Weiterhin werden zwei Vorrichtungen zur Durchführung des Verfahrens beschrieben.

Fig.2

EP 0 403 737 A1

## Verfahren und Vorrichtung zum Abdichten eines Abwasserkanals im Bereich von Seitenanschlüssen

Die Erfindung betrifft ein Verfahren zum Abdichten eines mit einem Inliner sanierten, nicht begehbaren Abwas serkanals im Bereich von Seitenanschlüssen, um die Hinterläufigkeit des Inliners zu verhindern, und eine Vorrichtung zur Durchführung dieses Verfahrens.

Es ist bekannt, undicht gewordene Abwasserkanäle mit Inlinern in Form von Kunststoffrohren oder aushärtbaren, mit Geweben armierten Kunststoffschläuchen zu sanieren.

Problematisch ist jedoch die Abdichtung im Bereich von Seitenanschlüssen, wo das Abwasser in den Spalt zwischen Inliner und Kanal rohr eindringen und aus dem beschädigten Abwasserkanal in das Grundwasser eindringen kann.

Für die Lösung dieses Problems wird in der DE-OS 36 10 752 vorgeschlagen, den Zwischenraum zwischen dem Kanal rohr und dem aus mehreren Rohrstücken zusammengesetzten Inliner mit Mörtel zu verfüllen.

Um die Abdichtung einfacher und billiger zu gestalten, wird in der DE-OS 36 18 963 vorgeschlagen, lediglich die Anschlußstelle vom Innenrohr her dicht zu verspachteln. Als Spachtelmasse wird ein mit Glasfasern verstärktes Polyesterharz verwendet, das auf einem mit einem Trennmittel versehenen Balg aufgetragen wird. Mit Hilfe dieses dehnbaren Balges wird die Spachtelmasse in den abzudichtenden Ringraum gepreßt und ausgehärtet. Das Verfahren ist jedoch sehr zeitaufwendig und erfordert teure Spezialvorrichtungen. Es hat aber den Vorteil, daß die ganze Anschlußstelle mit der Spachtelmasse bedeckt wird, und somit kleine Undichtigkeiten, die direkt an der Anschlußstelle liegen, ebenfalls abgedichtet werden. Dieser Fall ist jedoch relativ selten. Normalerweise ist bei intakter Anschlußleitung auch die Anschlußstelle selbst dicht, oder aber die Anschlußleitung ist selbst defekt und muß auch mit einem Inliner saniert werden. Für diese Normalfälle sind die bekannten Lösungen zur Vermeidung der Hinterläufigkeit von Inlinern zu aufwendig.

Es bestand daher die Aufgabe, ein einfaches Verfahren zur Verhinderung der Hinterläufigkeit von Inlinern im Bereich von Nebenanschlüssen und eine Vorrichtung zur Durchführung des Verfahrens zu entwickeln.

Die Aufgabe wird erfindungsgemäß durch ein Verfahren gelöst, bei dem vor dem Einbringen des Inliners 1 bzw. 7 im Bereich des Seitenanschlusses 2 mindestens eine ringförmige, elastische Dichtung 3 an der Innenwandung des Abwasserkanals 4 so fixiert wird, daß sie ihre Lage beim Einziehen des Inliners 1 oder 7 nicht verändern kann und von dem Inliner 1 oder 7, gegebenenfalls nach dessen Aus härtung, so an die Innenwandung des Abwasserkanals 4 gepreßt wird, daß zwischen diesem und dem Inliner 1 bzw. 7 zumindest vor und hinter dem Seitenanschluß 2 eine geschlossene Abdichtung gebildet wird.

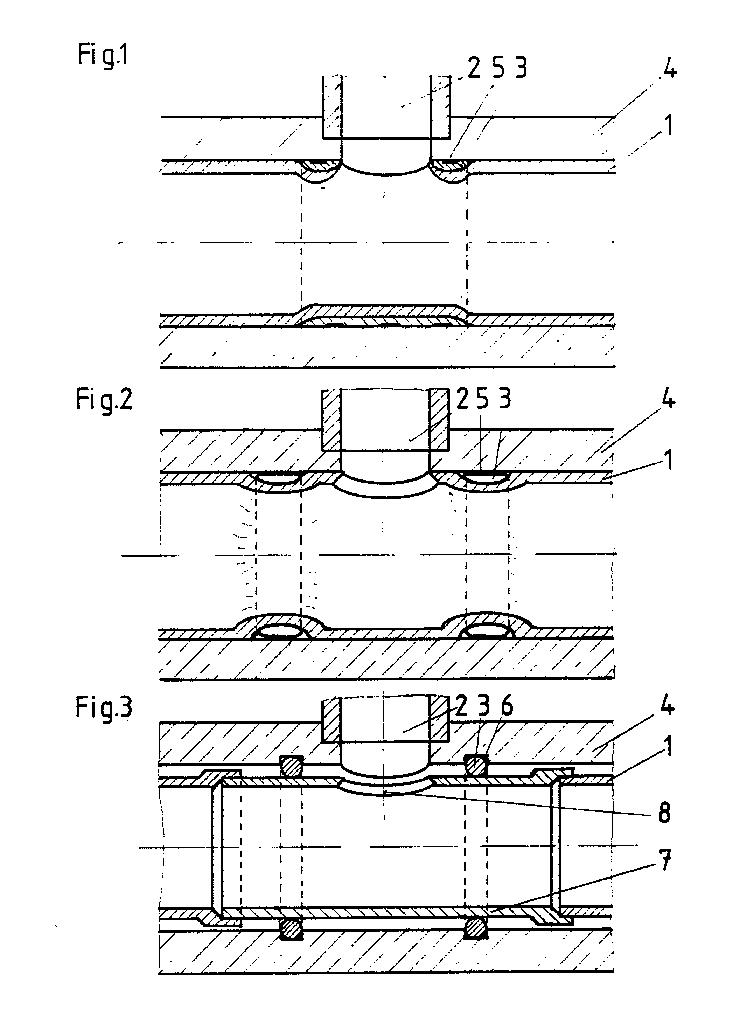

Als ringförmig, elastische Dichtung kann beispielsweise, wie in Fig. 1 gezeigt, eine zylindrische Dichtung 3 aus einem geschäumten, beständigen Elastomer, z. B. einem Chlorkautschuk, mit geschlossener Porenstruktur verwendet werden. die eine mindestens dem Seitenanschluß 2 entsprechende Öffnung aufweist. Die Länge der zylindrischen Dichtung 3 muß so bemessen sein, daß sie die Öffnung des Seitenanschlusses 2 auf beiden Seiten um einige Zentimeter überdeckt. Ihre Außenfläche ist zumindest teilweise mit einem Kontaktkleber 5 beschichtet. Da ihr Außendurchmesser geringer ist als der Innendurchmesser des Abwasserkanals 4, kann sie ohne Verschmutzung des Klebers 5 bis an die abzudichtende Stelle gebracht werden. Hier wird sie in bekannter Weise positioniert und so lange gegen die Innenwand des Abwasserkanals 4 gepreßt, bis der Kleber 5 für die nötige Fixierung gesorgt hat.

Nach dem Entfernen der Einbauvorrichtung wird als Inliner ein aushärtbarer Kunststoffschlauch 1 in den Abwasserkanal 4 eingestülpt und unter erhöhtem Innendruck ausgehärtet. Dabei wird die mehrere Millimeter dicke zylindrische Dichtung 3 zusammengepreßt und bildet eine geschlossene Abdichtung zwischen dem ausgehärteten Kunststoffschlauch 1 und dem Abwasserkanal , die die Hinterläufigkeit unterbindet.

Es muß nur noch die Öffnung für den Seitenanschluß aus dem Inliner 1 ausgefräst werden, um die Sanierung zu beenden. Die Fig. 1 zeigt diese Dichtung im eingebauten Zustand.

Da für die genaue Positionierung der Öffnung der zylindrischen Dichtung vor dem Seitenanschluß eine aufwendige Vorrichtung mit drehbarem Aufnahmeteil für die Dichtung und Fernsehkamera erforderlich ist, wird vorzugsweise eine zylindrische Dichtung ohne Seitenöffnung verwendet, und diese Öffnung beim Ausfräsen des Inliners ebenfalls herausgeschnitten. Auf eine Fernsehkamera kann in diesem Fall verzichtet werden, wenn der Abwasserkanal vorher genau vermessen wurde.

Die zylindrische Dichtung wird dann vorteilhaft verwendet, wenn der Abwasserkanal im Bereich der Anschlußstelle beschädigt und damit undicht ist. In allen anderen Fällen genügt je eine ringförmige Abdichtung auf jeder Seite der Anschlußstelle, wie sie in Fig. 2 dargestellt ist.

Die Dichtungsringe 3 bestehen aus Polyurethan und haben einen kastenförmigen Querschnitt, in dem Luft eingeschlossen ist. Die Außenfläche ist vollflächig mit einem Kontaktkleber 5 beschichtet. Der Außendurchmesser ist wie bei der zylindrischen Dichtung wieder geringer als der Innendurchmesser des Abwasserkanals 4. Die Dichtringe 3 werden auf beiden Seiten im Abstand von mehreren Zentimetern von der Einmündung des Seitenanschlusses 2 in den Abwasserkanal eingeklebt, und der Inliner 1 wird eingezogen. Die zusammengepreßten Dichtringe 3 bilden eine wirksame Abdichtung gegen das Hinterlaufen zu beiden Seiten des Seitenanschlusses 2. Der Einbau kann ebenfalls ohne Fernsehkamera erfolgen.

Eine andere Ausführung des Verfahrens zeigt Fig. 3. Hier bestehen die Dichtungsringe 3 aus Silikongummi und haben einen kreisförmigen Querschnitt mit einem Durchmesser, der mehr als die doppelte Spaltweite zwischen Inliner 1 und Abwasserkanal 4 beträgt. Der Durchmesser der Dichtungsringe ist außen mindestens um diesen Betrag größer als der Innendurchmesser des Abwasserkanals 4. Für den Einbau wird zunächst in einem Abstand auf beiden Seiten der Einmündung des Seitenanschlusses 2 eine ringförmig umlaufende Nut 6 in die Innenwandung des Abwasserkanals 4 gefräst, die in ihrer Breite etwa dem Durchmesser und in ihrer Tiefe etwa dem halben Durchmesser des Querschnitts des Dichtungsringes 3 entspricht. Mit einem geeigneten, mit einer Fernsehkamera ausgerüsteten Werkzeug werden die verformten Dichtungsringe 3 in die Nuten 6 eingesetzt. Anschließend wird als Inliner 1 das mit Gleitmittel wie beispielsweise Schmierseife, eingeriebenes Kurzrohr 7 mit der bereits ausgeschnittenen Öffnung 8 in üblicher Weise in den Abwasserkanal 4 eingezogen und mit den bereits verlegten, den Inliner 1 bildenden Kurzrohren verbunden. Da der Außendurchmesser des Kurzrohres 7 größer als der Innendurchmes ser des Dichtungsringes 3 ist, bildet dieser eine ringförmige Abdichtung, die das Hinterlaufen wirksam verhindert.

Für die Abdichtung von Inlinern aus starren Rohren eignen sich insbesondere Dichtungsringe mit einer inneren Dichtungslippe, also solche mit L- oder U-förmigem Querschnitt. Zur Abdichtung von Inlinern aus aushärtbaren Schläuchen, die zumindest beim Aushärten hydraulisch oder pneumatisch gegen die Innenwand des Abwas serkanals gepreßt werden, werden insbesondere Dichtungsringe aus leicht deformierbarem Material mit dreieckigem, trapezförmigem, rechteckigem oder kreisförmigem Querschnitt bevorzugt, wie z. B. aus Schaumstoffen, die gegebenenfalls mit einer Beschichtung aus einem nicht verschäumten, chemisch beständigen Elastomer versehen sind, oder aus einem Hohlkammerprofil.

Je nach Art der Fixierung der Dichtungsringe unterscheiden sich die Einbauvorrichtungen. Diese Unterschiede sind in den Zeichnungen beispielhaft dargestellt.

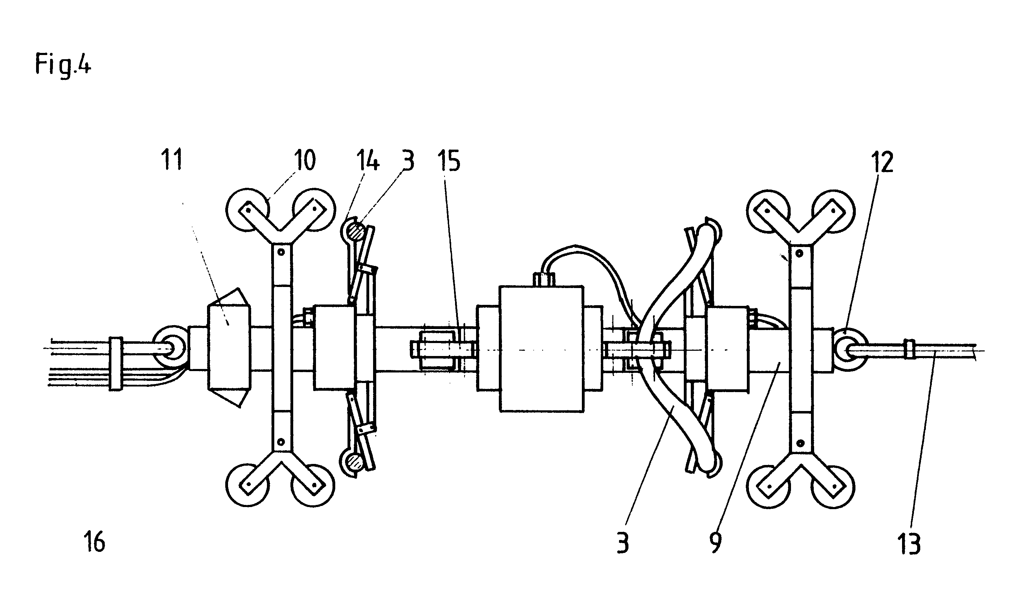

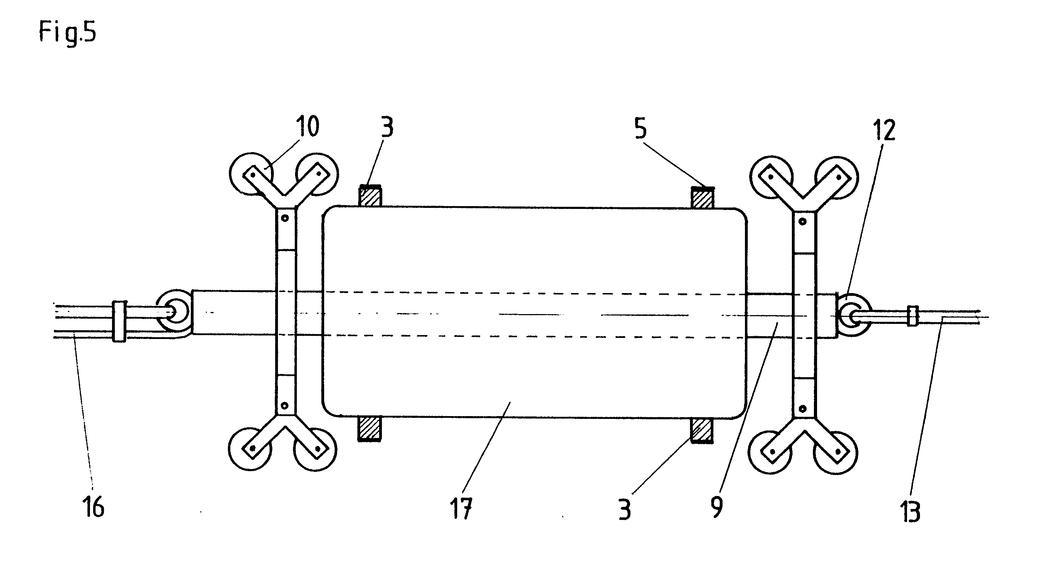

Fig. 4 zeigt eine Vorrichtung, mit der die Dichtungsringe in eine Nut eingelegt werden und Fig. 5 eine solche, mit der die Dichtungsringe in den Abwasserkanal eingeklebt werden.

Die Vorrichtung in Fig. 4 besteht aus einem Rahmen 9 mit zwei Zentriervorrichtungen 10 aus mindestens je drei schwenkbaren Rollenpaaren am Umfang, deren Abstand von der Mittel dem Kanaldurchmesser angepaßt werden kann. An der Vorderseite ist eine Fernsehkamera 11 mit eingebauter Beleuchtung installiert. An den beiden Enden des Rahmens 9 sind Ösen 12, an denen das Zugseil 13 befestigt wird. In der Mitte des Rahmens 9 befinden sich zwei Klemmvorrichtungen 14, die mechanisch, hydraulisch oder pneumatisch betätigt werden können, und zwei schwenkbare Niederhalter 15. Die Klemmvorrichtung 14 hat mindestens zwei, einander gegenüberliegende Arme, die kürzer sind als der Radius des Abwasserkanals. Die Arme des Niederhalters 15 sind zwischen denen der Klemmvorrichtung 14, in diesen Fall also um 90° versetzt, angeordnet.

Der Dichtring 3 wird oval verformt in die Klemmvorrichtung 14 eingesetzt und festgeklemmt. Die freien Halbovale werden dann nach innen gedrückt und mit dem Niederhalter 15 in dieser Stellung festgehalten. Nun wird die Vorrichtung mit Hilfe der Zugseile 13 in den Abwasserkanal hineingezogen bis sich der Dichtring 3 unter der in den Abwasserkanal gefrästen Nut befindet. Der Niederhalter 15 wird gelöst und der freie Teil des Dichtringes 3 schnellt in die Nut, wobei gegebenenfalls die Position der Vorrichtung geringfügig in achsialer Richtung verändert werden muß. Dann wird die Klemmvorrichtung 14 gelöst und der Dichtring 3 legt sich in die vorbereitete Nut. Der richtige Ablauf wird über die Fernsehkamera 11 beobachtet.

Der ganze Vorgang wird über die Versorgungs- bzw. Steuerleitungen 16 von außen gesteuert.

Die Vorrichtung in Fig. 5 unterscheidet sich von der nach Fig. 4 dadurch, daß statt der Klemmvorrichtungen und der Niederhalter im Mittelteil ein pneumatisch oder hydraulisch dehnbarer, zylindrischer Balg als Tragvorrichtung 17 für die Dichtringe 3 angeordnet ist. Außerdem ist auf eine Fernsehkamera verzichtet worden.

Nachdem die Lage des Seitenanschlusses genau vermessen worden ist, werden die außen mit einem Haftkleber beschichteten Dichtringe 3 auf die Tragvorrichtung 17 so aufgeschoben, daß ihr Abstand größer als die Breite des Seitenanschlusses ist. Die Vorrichtung wird nun die vorher bestimmte Strecke in den Abwasserkanal hineingezogen. Die Tragvorrichtung 17 wird nun gedehnt, und damit werden die Dichtringe 3 an die Innenwandung des Abwasserkanals gepreßt und kleben dort fest. Der Druck wird abgelassen und die Vorrichtung wieder aus dem Kanal herausgezogen.

Bei mehreren Seitenanschlüssen ist vorgesehen, mehrere dieser Vorrichtungen hintereinander anzuordnen und gemeinsam durch den Abwasserkanal zu ziehen. Dabei werden die Dichtringe auf der letzten Vorrichtung zuerst in den Kanal im Bereich des ersten Seitenanschlusses eingeklebt.

**Ansprüche**

1. Verfahren zum Abdichten eines Abwasserkanals im Bereich von Seitenanschlüssen, **dadurch gekennzeichnet**, daß vor dem Einbringen des Inliners( 1,7) im Bereich des Seitenanschlusses(2) mindestens eine ringförmige, elastische Dichtung(3) an der Innenwandung des Abwasserkanals(4) so fixiert wird, daß sie ihre Lage beim Einziehen des Inliners(1,7) nicht verändern kann und von dem Inliner( 1,7), gegebenenfalls nach dessen Aushärtung, so an die Innenwandung des Abwasserkanals(4) gepreßt wird, daß zwischen diesem und dem Inliner(1,7) zumindest vor und hinter dem Seitenanschluß(2) eine geschlossene Abdichtung gebildet wird.

2. Verfahren nach Anspruch 1, **dadurch gekennzeichnet**, daß die Dichtung(3) aus einem geschäumten Elastomer mit geschlossener Porenstruktur besteht, eine zylindrische Form hat, die einen geringeren Außendurchmesser als der Inndurchmesser des Abwasserkanals(4) und gegebenenfalls eine mindestens dem Seitenanschluß(2) entsprechende Öffnung aufweist, und an der Außenseite zumindest teilweise mit einem Kleber(5) beschichtet ist.

3. Verfahren nach Anspruch 1, **dadurch gekennzeichnet**, daß die Dichtung(3) aus mindestens je einem Dichtring auf jeder Seite des Seitenanschlusses besteht.

4. Verfahren nach Anspruch 1, **dadurch gekennzeichnet**, daß die elastische Dichtung(3) durch Kleben an der Innenwandung des Abwasserkanals(4) fixiert wird, wobei der Außendurchmesser der Dichtung(3) kleiner als der Inndurchmesser des Abwasserkanals(4) ist.

5. Verfahren nach Anspruch 1, **dadurch gekennzeichnet**, daß die elastische Dichtung(3) mittels einer in die Innenwandung des Abwasserkanals(4) gefräste, umlaufende Nut(6) fixiert wird, wobei der Außendurchmesser der Dichtung(3) größer als der Innendurchmesser des Abwasserkanals(4) ist.

6. Verfahren nach Anspruch 4, **dadurch gekennzeichnet**, daß die Dichtung(3) mittels einer Tragvorrichtung(17) , die beidseitig mit einer Zentriervorrichtung(10) versehen ist, und durch Aufweiten der Tragvorrichtung(17) an die Innenwand des Abwasserkanals(4) geklebt wird.

7. Verfahren nach Anspruch 5, **dadurch gekennzeichnet**, daß die Dichtung(3) mittels einer Klemmvorrichtung(14) in Verbindung mit einem Niederhalter(15) , die mit Zentriervorrichtungen(10) versehen sind, in die Nut(6) eingelegt wird.

8. Vorrichtung zur Durchführung des Verfahrens nach Anspruch 6, **dadurch gekennzeichnet**, daß sie aus einem Rahmen (9), mindestens 2wei Zentriervorrichtungen(10) , zwei Ösen(12) für die Zugseile(13) , einer aufweitbaren Tragvorrichtung(17) , Versorgungs- und/oder Steuerleitungen(16) und gegebenenfalls einer Fernsehkamera(11) besteht.

9. Vorrichtung zur Durchführung des Verfahrens nach Anspruch 7, **dadurch gekennzeichnet**, daß sie aus einem Rahmen(9) , mindestens zwei Zentriervorrichtungen(10) , zwei Ösen(12) für die Zugseile(13), zwei Klemmvorrichtungen(14), zwei Niederhaltern(15) , einer Fernsehkamera(11) und Versorgungs- und/oder Steuerleitungen(16) besteht.

10. Vorrichtung nach Anspruch 8 oder 9, **dadurch gekennzeichnet**, daß mehrere Einzelvorrichtungen entsprechend der Anzahl der Seitenanschlüsse(2) in dem Abschnitt des Abwasserkanals(4) hintereinander geschaltet sind.

Fig.1

Fig.2

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 041 147 (FUSHION EQUIPMENT LTD) <br> * Figur 6; Seite 1, Zeilen 46-57 * <br> --- | 1 | E 03 F 3/06 <br> F 16 L 55/16 <br> F 16 L 55/18 |
| A | EP-A-0 161 078 (PARKLYN) <br> * Figur 9 * <br> --- | 1 | |
| A,D | DE-C-3 618 963 (VOSS) <br> * Figuren * <br> --- | 1 | |
| X <br><br> Y <br> A | FR-A-1 353 451 (DELARUELLE & LE CORRE) <br> * Ansprüche 2,4; Figuren * <br><br> <br> --- | 8,10 <br><br> 9 <br> 4,6 | |
| Y <br><br> A | US-A-3 149 646 (XENIS) <br> * Ansprüche 1-2 * <br><br> --- | 9 <br><br> 7 | |
| A | CH-A- 635 181 (LODELL & CO.) <br> * Figuren; Seite 3, linke Spalte, Zeilen 9-18 * <br> ----- | 4,6,8 | |

RECHERCHIERTE SACHGEBIETE (Int. Cl.5)

E 03 F
E 03 C
F 16 L

Der vorliegende Recherchenbericht wurde für alle Patentansprüche erstellt

| Recherchenort | Abschlußdatum der Recherche | Prüfer |
|---|---|---|
| DEN HAAG | 26-09-1990 | VAN BEURDEN J.J.C.A. |